# EUROPEAN PATENT SPECIFICATION

(11) **EP 1 392 121 B1**
(45) Date of publication and mention of the grant of the patent: **13.07.2005**
(21) Application number: 02745176.4
(22) Date of filing: 31.05.2002
(51) Int. Cl.: A21C 9/04, A23P 1/08

(54) **A METHOD AND AN APPARATUS FOR APPLYING A MASS PRODUCT ON A NUMBER OF OBJECTS**
VERFAHREN UND VORRICHTUNG ZUM AUFBRINGEN EINES MASSEPRODUKTES AUF EINER MEHRZAHL VON OBJEKTEN
PROCEDE ET APPAREIL POUR APPLIQUER UN PRODUIT FABRIQUE EN SERIE SUR UN CERTAIN NOMBRE D'OBJETS

(30) Priority: 01.06.2001 DK 200100871
(43) Date of publication of application: 03.03.2004
(73) Proprietor: Bilwinco A/S, 8660 Skanderborg (DK)
(72) Inventor: BRIX, Flemming, DK-8680 Ry (DK)
(74) Representative: Sundien, Thomas
(86) International application number: PCT/DK2002/000373
(87) International publication number: WO 2002/096205

(56) References cited:
- EP-A1- 0 732 053
- EP-A2- 0 947 137

## Description

The present invention relates to a method and an apparatus for applying an essentially even layer of a predefined amount of mass product in an essentially uniform layer onto a number of objects, which apparatus comprises a conveyor for successive advancement of the objects and a dispenser unit located above the conveyor for distributing the predefined amount of mass product onto the object.

Such apparatuses are known in particular for the manufacture of eg pizzas, wherein the manufacturer desires that each individual pizza is topped with an essentially uniform layer of a mass product, such as cheese or other food product, and wherein - to ensure a uniform and good quality of the pizzas - it is endeavoured that a very exact amount of mass product be dispensed onto each pizza; and wherein it is desired to distribute the mass product thus applied in a uniform layer onto the pizzas.

For this purpose, an apparatus and a method are known today of the kind described in the opening paragraph, wherein, vertically above the conveyor, a belt conveyor is configured that has an end that is located such that the amount of mass product advanced on the belt conveyor drops like a waterfall down onto the subjacent conveyor and hence onto the objects successively advanced thereon.

In this prior art device a certain control of the amount of mass product applied onto each of the objects can be exercised, eg by regulation of the relative speed between the conveyor that advances objects and the belt conveyor that advances the mass product, or by regulating the layer thickness with which the mass product is dispensed onto the belt conveyor. However, it is obvious that variations, if any, in the layer thickness of the layer of mass product advanced on the belt conveyor will result in corresponding variations in the layer thickness of the layer of mass product applied onto the objects.

Therefore, by this prior art, particular means are often used to evenly distribute the layer of mass product on the belt conveyor.

By the prior art (EP-A-947137) it is achieved that, across the entire subjacent conveyor, a layer of mass product is applied, and in connection with eg the production of circular pizzas that are to be coated with eg cheese, the prior art technique will involve a certain waste of cheese that falls down between the individual pizzas and application of cheese entirely to the edge of each pizza.

For the sake of the subsequent baking process that part of the cheese that falls down between the individual pizzas can be removed and this excess amount of cheese may optionally be recycled for later application onto other objects in the same plant. For hygiene considerations, however, this is not always desirable. As regards the part of the cheese that falls peripherally on the pizzas, it may in some instances form undesired over-cooked cheese residue at the outermost edge of the pizza.

In the light of this, it is the object of the present invention to provide a method and an apparatus of the kind described above, and whereby - on the one hand - it is possible to avoid the above-mentioned drawbacks of the prior art technique, while simultaneously it is ensured to an increased degree that the pre-defined amount of mass product drops directly without waste and in an essentially even layer onto the desired object.

This is achieved by the method defined in accordance with the invention, which method is characterised in that wherein the thus formed shares are each conveyed separately through each their tubular member from a number of separate tubes corresponding to the number of shares; and wherein these tubes are configured such that they have lower ends that combine to form a mouthing that essentially covers the area on the object onto which it is desired to apply the even product layer, whereby each of the shares is caused to drop essentially on each their part of the object.

By a particularly advantageous embodiment of the method, wherein all shares are conveyed essentially simultaneously and in parallel through each their tube and to the object onto which it is desired to apply the shares, an extremely quick application of mass product onto the object is also achieved.

The advantage of the invention is achieved in the same manner by use of the apparatus according to the present invention, since this apparatus is characterised in that the dispenser unit also comprises a tubular system consisting of a number of separate tubes corresponding to the number of shares, and wherein each of these tubes has an upper and a lower end, wherein the lower ends of the tubes combine to form a mouthing that essentially covers the area on the object, onto which it is desired to apply the even product layer; and wherein the portioning device is provided with means for transferring each share at the upper end of each their tube in such a manner that the shares drop downwards through each their tube and out through the mouthing of the tubes.

According to a particularly quick and efficient embodiment of the invention, the portioning device is constituted of an essentially known combination-weighing machine, which combination-weighing machine is configured with a plurality of scales and means for filling each of the scales with a share of mass product that constitutes essentially a unit fraction of a predefined weight of mass product desired to be applied onto a an object; and wherein the portioning device has means for weighing and recording the weight of mass product in each of the scales and subsequently for selecting the combination of scales that contains the shares that combine to constitute a weight that is relatively closer to the predefined weight than is the case with other combinations of the scales; and wherein means are configured for emptying the share located in each of the selected scales into each their tube. Hereby quick and efficient portioning of the shares is obtained as well as a very efficient control that precisely the desired weight of mass product is located accurately on each object.

In this context, the scales can advantageously be arranged in a circle that is located around a hopper; and wherein each of the scales is provided with an activatable flap that allows discharge of the contents of the individual scale into the hopper and wherein the hopper is provided with guide faces that are configured with a view to conveying the shares discharged into the hopper to each their tube.

According to a particularly suitable embodiment of the apparatus according to the invention, the scales are divided into a number of groups of scales corresponding to the number of shares that form the desired weight of mass product; and wherein the means for selecting the combination of scales that contains the shares that combine to form a weight that is relatively closer to the predefined weight than is the case with other combinations of the scales are configured in such a manner that one and only one scale is selected from each of the above-mentioned groups; and wherein the hopper is then configured in such a manner as to convey shares dispensed from each their group of scales to each their tube. Hereby it is made extremely simple to transfer the selected portions of mass product to the correct tube without any risk of two shares being unintentionally conveyed to the object via one and the same tube.

As mentioned above, the apparatus is suitable for application of eg cheese onto pizzas, and in this context the tubes may advantageously be configured in a corresponding number, relative to the number of shares, of equally sized large sectors of circle that combine to form a full circle. If the outer diameter of the circle is selected to be in correspondence with or slightly smaller than the diameter of the pizzas, it is hereby possible to apply cheese onto the pizza in a quite even layer across the entire central area of the pizza without a significant risk of cheese dropping onto or beyond the edge of the pizza.

With a view to obtaining the most even layer possible of the layer of mass product applied onto the object, each tubular member is advantageously configured to comprise baffles with a view to distributing the share conveyed through the tube across the entire cross-section of the tube.

In order to avoid to the widest extent possible that the mass product drops onto the object in clearly separate groupings that clearly separate the individual shares, a preferred embodiment of the invention features one or more baffles at the lower end of the tubes with a view to influencing a part of the share conveyed through the tubes to admix with a part of another share conveyed through an adjoining tube.

The invention will be described in further detail in the following with reference to the drawings, wherein:
Figure 1 is an explanatory sketch showing a plant according to the present invention for applying a food product onto pizza crusts;
Figure 2 depicts a component of the plant according to Figure 1, in an inclined view from above;
Figure 3 is a sectional view that shows the component of the plant according to Figure 1 and depicted in Figure 2.

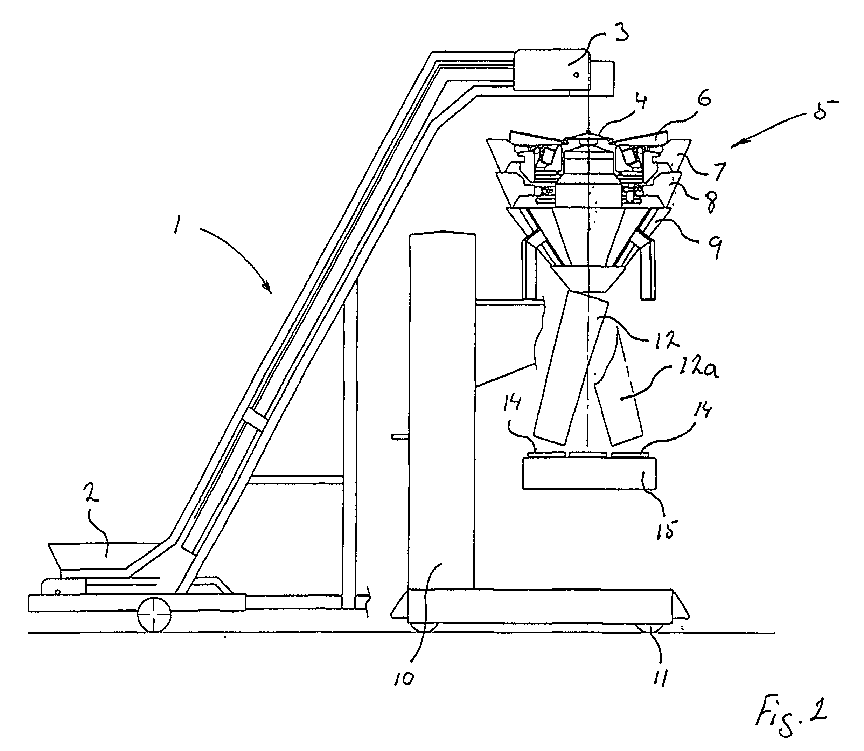

Thus, Figure 1 shows a plant according to the invention, which plants is arranged specifically for application of a food mass product onto pizza crusts, but it may just as well lend itself for use for other tasks, wherein it is desired to distribute an amount of mass product evenly across a pre-formed object.

The plant according to Figure 1 thus consists of a conveyor 1 having at the bottom a storage facility 2, into which a large amount of the food mass product desired to be applied onto the pizza crusts can be charged. In this case, the mass product in question is specifically grated, granulated or in some other way finely divided cheese.

The conveyer 1 is subsequently configured for extracting cheese from the lower storage facility 2 and lifting the cheese upwards to the upper end 3 of the conveyor, where the cheese drops down onto a distributor cone 4 on a combination-weighing machine 5, where the cheese is distributed across the distributor cone to a number of vibrating conveyors 6 that are located in such a manner that they subsequently convey the cheese radially outwards to storage receptacles and scales in a number that corresponds to the number of vibrating conveyors.

In this embodiment the combination-weighing machine is suspended in a frame 10 that is provided with wheels 11.

The structure of the combination-weighing machine is thus constructed to be essentially symmetrical around a vertical axis that extends through the centre of the distributor cone 4, and the weighing machine may thus comprise many vibrating conveyors, containers and scales depending on the desired capacity of the weighing machine.

Thus the combination-weighing machine hereby functions such that a not shown electronic control system fills each of said scales until it is accomplished that, in each scale, there is a portion corresponding to approximately one third of the portion of cheese that it is desired to apply onto each of the pizzas. Then a combinatorial calculation is performed of which scales combine to contain the weight that is most proximate to or acceptably proximate to the desired total weight, following which the electronic control system causes the scales selected in the combination process to be activated to discharge their contents into the hopper 9 located underneath the combination-weighing machine and having a downwardly configured mouthing 13.

Underneath the hopper 9 there is now provided a distributor tube 12 that is, at its upper end, kept in position underneath the lower opening 13 of the hopper 9 in such a manner that the portions of cheese discharged to the hopper are transmitted to the distributor tube 12, following which the cheese portions drop down through the distributor tube 12.

The distributor tube 12 being pivotally suspended underneath the hopper 9, the distributor tube 12 is hereby able, by means of one or more not shown actuators, to occupy a position across one of the pizza crusts 14 that are located on a conveyor 15 intended therefor. Figure 1 shows the distributor tube 12 in a position above a pizza crust 14 at the opposite side of the conveyor 15 and dotted lines show it in another position 12a, where the distributor tube 12 is positioned above a pizza crust 14 at the other side of the conveyor 15.

In case of plants of this type it is thus possible, due to the very large capacity and accuracy of the combination-weighing machine 5, to obtain that the individual pizza crusts 14 have applied precisely the correct amount of cheese, while simultaneously a high productivity is obtained.

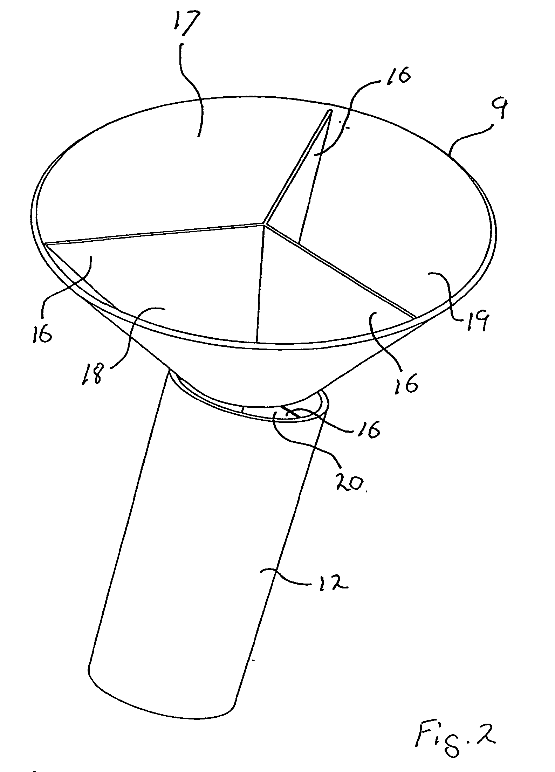

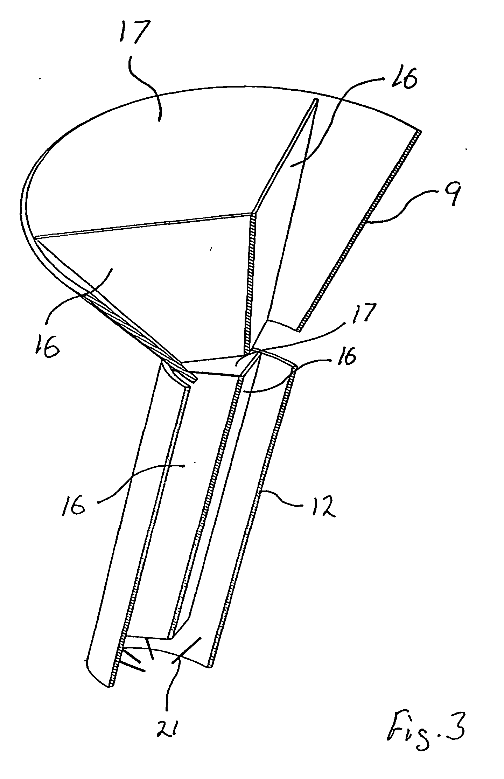

Now Figures 2 and 3 show a part of the plant shown in Figure 1, viz the hopper 9 and the distributor tube 12. In accordance with the invention, it will appear there from, that the hopper and the distributor tube 12 are divided by means of walls 16, 20 into three segments 17, 18, 19 that form three separate tubes.

As will appear from this with reference to Figures 1, 2 and 3 in combination, a given share of cheese that is discharged from a specific scale, will drop accurately into one of the above-mentioned segments 17, 18, 19 and into the hopper 9 and the tube 12. When the criterion that scales 8 from all segments are to be selected to be constituents in a combined portion is subsequently entered into the electronic control selecting combinations of scales, the selected shares will fall down through the hopper 9 and the distributor tube 12 through each their segment 17, 18, 19, whereby the shares are kept entirely separated until the walls 16 cease at the lower end of the distributor tube 12.

Hereby the individual shares fall through separate tubes that have a considerably smaller cross section than the large one, and solely because of this, but also because there is an increased chance of the shares distributing across the entire cross section of the tube due to the cheese being tossed around within the tube when coming into contact with eg the sides of the tubes, etc.

In this context, however, it is an option to mount a number of not shown baffles in the individual segments 17, 18, 19 with a view to ensuring to a higher degree that the individual shares distribute optimally across the entire tubular segment 17, 18, 19. Such baffles may be configured in a variety of ways in sheets, threads, and the like, depending on the given task.

At the lower end of the distributor tube 12, there is - as shown in Figure 3 - arranged a number of baffles in the form of sticks 21 that protrude into the tube. These sticks 21 will, when a portion of cheese drops down among the sticks 21, cause a part of the cheese in the individual portion to bounce off the sticks 21 and hence a certain transversal movement is created in the falling portion of cheese, thereby increasing the chances of a uniform distribution of cheese on the topped pizza crust 14.

In the above-mentioned manner good distribution of the combined portion of cheese on the pizza crust 14 will be obtained, while simultaneously the portion will - since the diameter on the distributor tube 12 can be selected in a suitable size depending on the diameter of the pizza crust 14 - with a high degree of certainty even out completely within the edges of the pizza crust 14. Due to the overall weight of the three shares being extremely accurate, this will further contribute to a uniform quality of the finished pizza.

Obviously variations in the present invention can be made by use more or fewer part segments in the distributor tube 12, and the distributor tube 12 can be configured in other ways than the one shown, such as eg with a rectangular or oval cross-section. Alternatively a number of separate tubes can be used instead of an overall tube divided into segments as shown in the figures.

Of course, it is also possible in accordance with the invention to use, as an alternative to the shown combination-weighing machine, other means for forming the individual shares, such as a volume-portioning machine, wherein the individual portions are formed on the basis of the desire to have a fixed volume instead of a fixed weight.

## Claims

1. A method of applying an essentially even layer of a pre-defined amount of mass product onto a number of objects, and wherein the objects are advanced successively on a conveyor intended therefor, and wherein the predefined amount of mass product is applied onto each of the objects, first two or more shares of mass product are formed, said shares combining to form approximately the predefined amount of mass product, **characterised in that** the shares thus formed are each conveyed through each their tube from a number of separate tubes corresponding to the number of shares; and wherein these tubes are configured so as to have lower ends that combine to form a mouthing that covers essentially that area of the object onto which it is desired to apply the even product layer, whereby each of the shares is caused to drop essentially onto each their part of the object.

2. A method according to claim 1, **characterised in that** each of the shares conveyed through each their tube is influenced by baffles intended therefor and provided within the tube in such a manner that the share is distributed across essentially the entire cross section of the tube prior to the share dropping onto the object.

3. A method according to claim 1 or 2, **characterised in that** each of the shares at the lower end of the tubes is influenced by baffles intended therefor in such a manner that a part of the share is admixed with a part of another adjoining share.

4. A method according to one of the preceding claims, **characterised in that** all shares are conveyed essentially simultaneously and in parallel through each their tube and to the object onto which it is desired to apply the shares.

5. An apparatus for applying an essentially even layer of a predefined amount of mass product in an essentially uniform layer onto a number of objects (14), said apparatus comprising a conveyor (15) for successive advancement of the objects (14), and a dispenser unit (5) located above the conveyor (15) for distributing the predefined amount of mass product on the object (1), the dispenser unit (5) comprises a portioning device (9) that is configured with a view to forming two or more separate shares (17,18,19) of mass product, said shares combining to form approximately the predefined amount of mass product; **characterised in that** the dispenser unit (5) additionally comprises a tubular system (12) consisting of a number of separate tubes corresponding to the number of shares (17,18,19); and wherein each of these tubes has an upper and a lower end; wherein the lower ends of the tubes combine to form a mouthing that forms a coherent area that essentially covers the area on the object (14) onto which it is desired to apply the even layer of the mass product; and wherein the portioning device (9) has means for transferring each share in the upper end of each their tube in such a manner that the shares drop through each their tube and out through the mouthing of the tubes.

6. An apparatus according to claim 5, **characterised in that** the portioning device comprises a combination-weighing machine comprising a number of scales and means for filling into each of the scales a share of mass product that essentially constitutes a unit fraction of a predefined weight of mass product which it is desired to apply onto an object; and wherein the portioning device has means for selecting the combination of scales that contain the shares that combine to form a weight that is relatively closer to the predefined weight than was the case with other combinations of the scales; and wherein means are configured for discharging the share contained in each of the thus selected scales into each their tube.

7. An apparatus according to claim 6, **characterised in that** the scales are arranged in a circle located around a hopper; and wherein the scales are each provided with an activatable flap that allows emptying of the individual scale into the hopper; and wherein the hopper is provided with guide faces configured with a view to conveying the shares discharged into the hopper to each their tube.

8. An apparatus according to claim 7, **characterised in that** the scales are divided into a number of groups of scales corresponding to the number of shares that form the desired weight of mass product; and wherein the means for selecting the combination of scales that contains the shares that combine to form a weight that is relatively closer to the predefined weight than was the case with other combinations of the scales are configured in such a manner that one and only one scale from each of the above-mentioned groups is selected; and wherein the hopper is then configured in such a manner that it conveys shares discharged from each their group of scales to each their tube.

9. An apparatus according to claim 7 or 8, **characterised in that** the tubes are configured in a number of equally sized sectors of circle that combine to form a full circle, said number corresponding to the number of shares.

10. An apparatus according to one of claims 5 through 9, **characterised in that** in each tube baffles are configured with a view to distributing the share conveyed through the tube across the entire cross section of the tube.

11. An apparatus according to one of claims 5 through 10, **characterised in that**, at the lower end of the tubes, one or more baffles is/are configured with a view to influencing a part of the share advanced through one of the tubes to admix with a part of another share advanced through an adjoining tube.

12. An apparatus according to one of claims 6 through 11, **characterised in that** the means for discharging the share contained in each of the thereby selected scales into each their tube are configured in such a manner that they enable essentially simultaneous discharge of the contents of the selected scales.

## Patentansprüche

1. Verfahren zum Aufbringen einer im Wesentlichen glatten Schicht aus einer zuvor festgelegten Menge eines Massenprodukts auf eine Anzahl von Objekten, wobei die Objekte nacheinander auf einer fur diesen Zweck vorgesehenen Transportvorrichtung vorwarts transportiert werden, und wobei die zuvor festgelegte Menge an Massenprodukt auf jedes der Objekte aufgebracht wird, wobei erste zwei oder mehr Anteile an Massenprodukt gebildet werden, wobei diese Anteile dergestalt kombiniert werden, dass ungefahr die zuvor festgelegte Menge an Massenprodukt entsteht, **dadurch gekennzeichnet, dass** die auf diese Weise gebildeten Anteile jeweils durch ihre eigene Rohre aus einer Anzahl separater Rohren, die der Anzahl an Anteilen entspricht, transportiert werden, und wobei diese Rohren dergestalt konfiguriert sind, dass sie untere Enden aufweisen, die zu einer Mundung zusammenlaufen, die sich im Wesentlichen uber jenen Bereich des Objekts erstreckt, auf den die glatte Produktschicht aufgebracht werden soll, wodurch bewirkt wird, dass jeder der Anteile im Wesentlichen auf den ihm zugedachten Abschnitt des Objekts herabfallt.

2. Verfahren nach Anspruch 1, **dadurch gekennzeichnet, dass** jeder der Anteile, der durch seine jeweilige Rohre transportiert wird, durch Leitbleche, die fur diesen Zweck vorgesehen und in der Röhre angeordnet sind, dergestalt beeinflusst wird, dass der Anteil über im Wesentlichen den gesamten Querschnitt der Röhre verteilt wird, bevor der Anteil auf das Objekt herabfallt.

3. Verfahren nach Anspruch 1 oder 2, **dadurch gekennzeichnet, dass** jeder der Anteile am unteren Ende der Rohren dergestalt durch für diesen Zweck vorgesehene Leitbleche beeinflusst wird, dass eine Teilmenge des Anteils mit einer Teilmenge eines anderen benachbarten Anteils vermengt wird.

4. Verfahren nach einem der vorangehenden Ansprüche, **dadurch gekennzeichnet, dass** alle Anteile im Wesentlichen gleichzeitig und parallel durch ihre jeweilige Rohre und zu dem Objekt, auf das die Anteile aufgebracht werden sollen, transportiert werden.

5. Vorrichtung zum Aufbringen einer im Wesentlichen glatten Schicht aus einer zuvor festgelegten Menge eines Massenprodukts als eine im Wesentlichen gleichmaßige Schicht auf eine Anzahl von Objekten (14), wobei die Vorrichtung eine Transportvorrichtung (15) zum aufeinanderfolgenden Vorwartstransport der Objekte (14) sowie eine Abgabevorrichtung (5), die uber der Transportvorrichtung (15) angeordnet ist und dazu dient, die zuvor festgelegte Menge an Massenprodukt auf dem Objekt (14) zu verteilen, umfasst, wobei die Abgabevorrichtung (5) eine Portionierungsvorrichtung (9) umfasst, die dafur konfiguriert ist, zwei oder mehr separate Anteile (17, 18, 19) an Massenprodukt zu bilden, wobei diese Anteile dergestalt kombiniert werden, dass ungefahr die zuvor festgelegte Menge an Massenprodukt entsteht, **dadurch gekennzeichnet, dass** die Abgabevorrichtung (5) des Weiteren ein Röhrensystem (12) umfasst, das aus einer Anzahl von separaten Rohren besteht, die der Anzahl an Anteilen (17, 18, 19) entspricht, und wobei jede dieser Röhren ein oberes und ein unteres Enden aufweist, wobei die unteren Enden der Röhren zu einer Mündung zusammenlaufen, die einen zusammenhängenden Bereich bildet, der sich im Wesentlichen uber jenen Bereich des Objekts (14) erstreckt, auf den die glatte Schicht aus Massenprodukt aufgebracht werden soll, und wobei die Portionierungsvorrichtung (9) Mittel ausweist, um jeden Anteil im oberen Ende seiner jeweiligen Rohre dergestalt zu transferieren, dass die Anteile durch ihre jeweilige Rohre und aus der Mundung der Rohren heraus fallen.

6. Vorrichtung nach Anspruch 5, **dadurch gekennzeichnet, dass** die Portionierungsvorrichtung eine Kombinationswiegemaschine umfasst, die eine Anzahl von Waagen sowie Mittel umfasst, mit denen in jede Waage ein Anteil an Massenprodukt eingefullt wird, der im Wesentlichen einen Bruchteil eines zuvor festgelegten Gewichts an Massenprodukt darstellt, das auf ein Objekt aufgebracht werden soll, und wobei die Portionierungsvorrichtung Mittel umfasst, mit denen die Kombination aus Waagen ausgewahlt wird, welche die Anteile enthalten, die zu einem Gewicht kombiniert werden, das relativ naher an dem zuvor festgelegten Gewicht liegt, als es mit anderen Kombinationen dieser Waagen der Fall ware, und wobei Mittel dafur konfiguriert sind, den Anteil, der in jeder der auf diese Weise ausgewahlten Waagen enthalten ist, in seine jeweilige Rohre abzugeben.

7. Vorrichtung nach Anspruch 6, **dadurch gekennzeichnet, dass** die Waagen in einem Kreis angeordnet sind, der um einen Zufuhrtrichter herum angeordnet ist, und wobei die Waagen jeweils mit einer aktivierbaren Klappe versehen sind, mit deren Hilfe die jeweilige Waage in den Zufuhrtrichter entleert werden kann, und wobei der Zufuhrtrichter mit Führungsflächen versehen ist, die dafur konfiguriert sind, die Anteile, die in den Zufuhrtrichter abgelassen werden, zu ihrer jeweiligen Rohre zu transportieren.

8. Vorrichtung nach Anspruch 7, **dadurch gekennzeichnet, dass** die Waagen in eine Anzahl von Waagen-Gruppen unterteilt sind, die der Anzahl von Anteilen entspricht, die das gewunschte Gewicht an Massenprodukt bilden, und wobei die Mittel zum Auswahlen der Kombination aus Waagen, welche die Anteile enthalten, die zu einem Gewicht kombiniert werden, das relativ naher an dem zuvor festgelegten Gewicht liegt, als es mit anderen Kombinationen dieser Waagen der Fall wäre, dergestalt konfiguriert sind, dass lediglich eine einzige Waage aus jeder dieser Gruppen ausgewahlt wird, und wobei der Zufuhrtrichter dann dergestalt konfiguriert ist, dass er Anteile, die von ihrer jeweiligen Waagen-Gruppe abgelassen werden, zu ihrer jeweiligen Rohre transportiert.

9. Vorrichtung nach Anspruch 7 oder 8, **dadurch gekennzeichnet, dass** die Röhren als eine Anzahl gleich großer Kreissektoren ausgebildet sind, die sich zu einem Vollkreis zusammenschließen, wobei diese Anzahl der Anzahl der Anteile entspricht.

10. Vorrichtung nach einem der Anspruche 5 bis 9, **dadurch gekennzeichnet, dass** in jeder Rohre Ablenkbleche dafür konfiguriert sind, den durch die Rohre transportierten Anteil uber den gesamten Querschnitt der Rohre zu verteilen.

11. Vorrichtung nach einem der Anspruche 5 bis 10, **dadurch gekennzeichnet, dass** am unteren Ende der Röhren ein oder mehrere Ablenkbleche dafur konfiguriert sind, eine Teilmenge des Anteils, der durch eine der Rohren vorwarts transportiert wird, so zu beeinflussen, dass sich diese Teilmenge mit einer Teilmenge eines anderen Anteils, der durch eine benachbarte Röhre vorwärts transportiert wird, zu vermengen.

12. Vorrichtung nach einem der Anspruche 6 bis 11, **dadurch gekennzeichnet, dass** die Mittel, die den Anteil, der in jeder der auf jene Weise ausgewahlten Waagen enthalten ist, in seine jeweilige Rohre auslassen, dergestalt konfiguriert sind, dass sie ein im Wesentlichen gleichzeitiges Ablassen des Inhalts der ausgewählten Waagen ermoglichen.

## Revendications

1. Procédé pour appliquer une couche sensiblement régulière d'une quantité prédéfinie de produit en masse sur une pluralité d'objets, et dans lequel les objets sont avancés successivement sur un transporteur destiné pour cela, et dans lequel la quantité prédéfinie du produit en masse est appliquée sur chacun des objets, deux premières ou plusieurs portions du produit en masse sont formées, lesdites portions se combinant pour former approximativement la quantité prédéfinie du produit en masse,
**caractérisé en ce que** les portions ainsi formées sont chacune transportées à travers chaque tube d'une pluralité de tubes séparés correspondant au nombre de portions ; et dans lequel ces tubes sont configurés de façon à avoir les extrémités inférieures qui se combinent pour former une embouchure qui recouvre essentiellement la zone de l'objet sur laquelle on souhaite appliquer la couche régulière de produit, grâce à quoi chacune des portions est entraîné à tomber sensiblement sur chaque partie de l'objet.

2. Procédé selon la revendication 1,
**caractérisé en ce que** chacune des portions transportées à travers chacun des tubes est influencée par des chicanes destinées pour cela et prévues à l'intérieur du tube de telle manière que la portion soit répartie essentiellement à travers la totalité de la section transversale du tube avant que la portion ne tombe sur l'objet.

3. Procédé selon la revendication 1 ou 2,
**caractérisé en ce que** chacune des portions, au niveau de l'extrémité inférieure des tubes, est influencée par des chicanes destinées pour cela de telle manière qu'une partie de la portion soit mélangée avec une partie d'une autre portion adjacente.

4. Procédé selon l'une des revendications précédentes,
**caractérisé en ce que** toutes les portions sont transportées essentiellement simultanément et en parallèle à travers chacun des tubes et vers l'objet sur lequel on souhaite appliquer les portions.

5. Appareil pour appliquer une couche sensiblement régulière d'une quantité prédéfinie de produit en masse en une couche sensiblement uniforme sur une pluralité d'objets (14), ledit appareil comprenant un transporteur (15) pour l'avance successive des objets (14), et une unité de distribution (5) située au-dessus du transporteur (15) pour distribuer la quantité prédéfinie du produit en masse sur l'objet (1), l'unité de distribution (5) comprenant un dispositif de partage (9) qui est configuré en vue de former deux ou plusieurs portions séparées (17, 18, 19) du produit en masse, lesdites portions se combinant pour former approximativement la quantité définie du produit en masse,
**caractérisé en ce que** l'unité de distribution (5) comprend de plus un système tubulaire (12) composé d'une pluralité de tubes séparés correspondant au nombre de portions (17, 18, 19) ; et dans lequel chacun de ces tubes a une extrémité supérieure et une extrémité inférieure ; dans lequel les extrémités inférieures des tubes se combinent pour former une embouchure qui forme une zone cohérente qui recouvre essentiellement la zone sur l'objet (14) sur laquelle on souhaite appliquer la couche régulière du produit en masse ; et dans lequel le dispositif de partage (9) présente des moyens pour transférer chaque portion dans l'extrémité supérieure de chacun des tubes de telle manière que les portions tombent à travers chacun des tubes et sortent par l'embouchure des tubes.

6. Appareil selon la revendication 5,
**caractérisé en ce que** le dispositif de partage comprend une machine de pesée en combinaison comprenant une pluralité de balances et des moyens pour remplir chacune des balances avec une portion du produit en masse qui constitue essentiellement une fraction unitaire d'un poids prédéfini du produit en masse que l'on souhaite appliquer sur un objet ; et dans lequel le dispositif de partage présente des moyens pour choisir la combinaison de balances qui contient les portions qui se combinent pour délivrer un poids qui est relativement le plus près du poids prédéfini que ne le sont les autres combinaisons des balances ; et dans lequel des moyens sont configurés pour évacuer la portion contenue dans chacune des balances ainsi choisies dans chacun des tubes.

7. Appareil selon la revendication 6,
**caractérisé en ce que** les balances sont agencées en cercle situé autour d'une trémie ; et dans lequel les balances sont chacune munies d'un volet actionnable qui permet de vider la balance particulière dans la trémie ; et dans lequel la trémie est munie de faces de guidage configurées en vue de transporter les portions évacuées dans la trémie vers chacun des tubes.

8. Appareil selon la revendication 7,
**caractérisé en ce que** les balances sont divisées en une pluralité de groupes de balances correspondant au nombre de portions qui forment le poids souhaité du produit en masse ; et dans lequel les moyens pour choisir la combinaison de balances qui contient les portions qui se combinent pour délivrer un poids qui est relativement le plus près du poids prédéfini que ne le sont les autres combinaisons des balances, sont configurés de telle manière qu'une et seulement une balance à partir de chacun des groupes mentionnés ci-dessus est choisie ; et dans lequel la trémie est alors configurée de telle manière qu'elle transporte les portions évacuées de chacun des groupes de balances vers chacun des tubes.

9. Appareil selon la revendication 7 ou 8,
**caractérisé en ce que** les tubes sont configurés en un nombre de secteurs circulaires dimensionnellement égaux qui se combinent pour former un cercle entier, ledit nombre correspondant au nombre de portions.

10. Appareil selon l'une des revendications 5 à 9,
**caractérisé en ce que**, dans chaque tube, des chicanes sont configurées en vue de répartir la portion transportée dans le tube à travers la totalité de la section transversale du tube.

11. Appareil selon l'une des revendications 5 à 10,
**caractérisé en ce que**, au niveau de l'extrémité inférieure des tubes, une ou plusieurs chicanes est/sont configurée(s) en vue d'influencer une partie de la portion qui avance à travers l'un des tubes, à se mélanger avec une partie d'une autre portion qui avance à travers un tube adjacent.

12. Appareil selon l'une des revendications 6 à 11,
**caractérisé en ce que** les moyens pour évacuer la portion contenue dans chacune des balances ainsi choisies dans chacun des tubes sont configurés de telle manière qu'ils permettent une évacuation sensiblement simultanée du contenu des balances choisies.
